# FASCICULE DE BREVET EUROPEEN

(11) **EP 1 624 709 B1**
(45) Date de publication et mention de la délivrance du brevet: **12.02.2020**
(21) Numéro de dépôt: 05106371.7
(22) Date de dépôt: 12.07.2005
(51) Int. Cl.: H04W 24/02

(54) **PROCÉDÉ ET SYSTÈME POUR L'EXPLOITION D'UN RÉSEAU CELLULAIRE DE COMMUNICATIONS MOBILES**
VERFAHREN UND SYSTEM ZUR NUTZUNG EINES ZELLULAREN MOBILKOMMUNIKATIONSNETZES
METHOD AND SYSTEM FOR MANAGING A CELLULAR MOBILE COMMUNICATION NETWORK

(30) Priorité: 05.08.2004 FR 0408656
(43) Date de publication de la demande: 08.02.2006
(73) Titulaire: Alcatel Lucent, 91620 Nozay (FR)
(72) Inventeur: de Mathan, Béatrix, 75016, PARIS (FR); Brethereau, Alain, 78220, VIROFLAY (FR); Houllier, Jean-Roch, 91240, SAINT MICHEL SUR ORGE (FR)
(74) Mandataire: Browne, Robin Forsythe

(56) Documents cités:
- EP-A- 1 098 546
- WO-A-97/24896
- WO-A-97/50271
- WO-A-99/09773
- GB-A- 2 394 146
- US-A- 6 128 500
- US-B1- 6 327 677

## Description

La présente invention concerne d'une manière générale les systèmes cellulaires de communications mobiles.

D'une manière générale, les systèmes cellulaires de communications mobiles font l'objet de normalisation, et pour plus d'informations on pourra se reporter aux normes correspondantes, publiées par les organismes de normalisation correspondants.

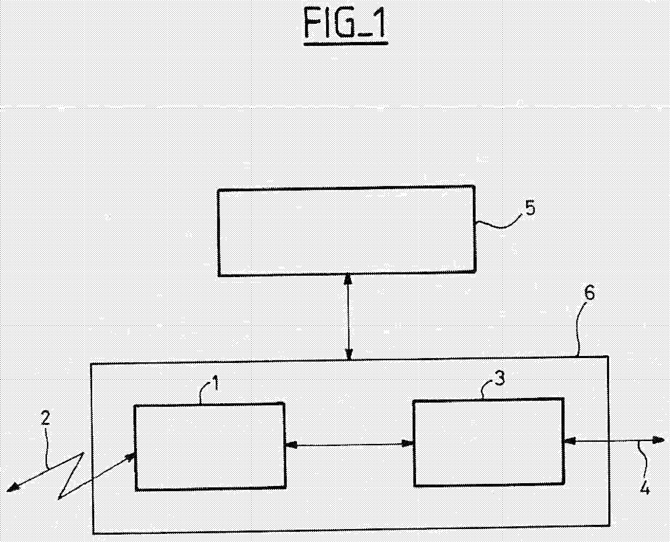

On rappelle simplement qu'un système cellulaire de communications mobiles peut, comme rappelé sur la figure 1, se décomposer en trois sous-ensembles :
- un sous-système radio, noté 1, ou « réseau radio », essentiellement en charge des fonctions de transmission sur l'interface radio (notée 2) et de gestion des ressources radio, ce sous-système radio étant aussi appelé BSS (« Base Station Sub-System ») dans des systèmes tels que notamment le GSM (« Global System for Mobile communications ») ou encore RNS (« Radio Network Subsystem ») dans des systèmes tels que notamment l'UMTS (« Universal Mobile Telecommunications System»),
- un sous-système d'acheminement, noté 3, ou « réseau fixe », ou NSS (« Network Sub-System »), essentiellement en charge des fonctions d'établissement des appels et de gestion de la mobilité, ce sous-système d'acheminement étant en relation d'une part avec le sous-système radio et d'autre part (comme illustré en 4) avec des réseaux extérieurs (non illustrés spécifiquement),
- un sous-système d'exploitation, noté 5, ou OSS (« Operation Sub-System »), permettant essentiellement à l'opérateur de gérer son réseau (noté 6, formé du « réseau radio » 1 et du « réseau fixe » 3).

Un document d'arrière plan technologique est le document WO 97/50271 A.

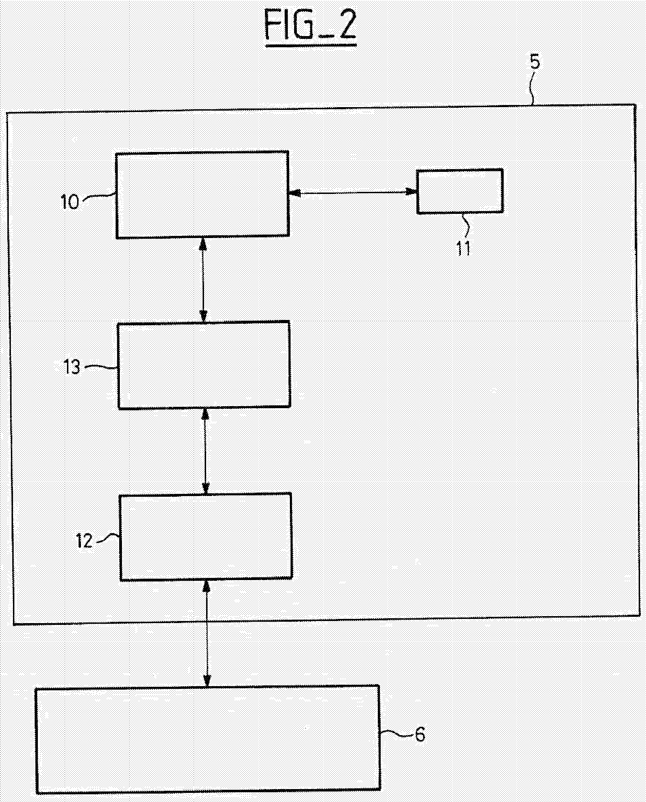

On rappelle en outre qu'un système pour l'exploitation d'un réseau cellulaire de communications mobiles peut lui-même, comme rappelé sur la figure 2, se décomposer en trois sous-systèmes :
- un sous-système noté 10, en charge essentiellement des différents traitements correspondant à la mise en œuvre des différentes tâches d'exploitation, ce sous-système étant en relation avec l'opérateur via des stations de travail notées 11,
- un sous-système noté 12, en charge essentiellement d'appliquer au réseau 6 différentes commandes issues du sous-système 10, et de recevoir du réseau 6 différentes données nécessaires aux traitements réalisés par le sous-système 10,
- un sous-système, noté 13, réalisant des fonctions de communication entre les sous-systèmes 10 et 12.

L'exploitation du réseau recouvre différentes tâches, dont une particulièrement importante correspond à l'optimisation du réseau radio. D'une manière générale, dans cette tâche d'optimisation du réseau radio, l'objectif pour l'opérateur (appelé aussi dans ce qui suit optimiseur, ou utilisateur) est d'atteindre la qualité de service souhaitée tout en utilisant aussi efficacement que possible les ressources radio disponibles.

L'optimisation du réseau radio recouvre elle-même différentes fonctions, dont une particulièrement importante correspond à une fonction dite de « tuning » (ou réglage de configuration radio), permettant à l'opérateur de modifier si nécessaire des paramètres radio, notamment des paramètres logiques tels que par exemple des paramètres d'allocation de fréquence, de contrôle de puissance, de transfert inter-cellulaire ou « handover », ...etc.

La fonction de « tuning » est elle-même exécutée en différentes étapes. Généralement, à partir d'une analyse de différentes données telles que notamment des données de configuration et des données de performance (telles que notamment des indicateurs de qualité de service), l'optimiseur peut déterminer de meilleures valeurs de paramètres radio permettant d'optimiser le réseau, et les valeurs ainsi déterminées sont ensuite appliquées au réseau.

D'une manière générale, divers outils ont été développés pour aider l'optimiseur dans cette analyse, tels que : suivi de qualité de service, analyse cartographique, outils de diagnostic, ...etc. Différents indicateurs de qualité de service ont également été proposés, qui peuvent en outre être consolidés spatialement et/ou temporellement, tels que par exemple le taux de coupure d'appels (ou « call drop rate » en anglais) que l'on peut suivre par exemple à la journée et par cellule.

Une telle analyse, et notamment l'interprétation de ces différents indicateurs de qualité de service, restent cependant complexes et délicates. De plus, l'accroissement du trafic à gérer et, par conséquent, le nombre toujours plus grand d'éléments de réseau mis en place, et donc de paramètres à traiter, mais aussi la variété et la complexité des informations hétérogènes à analyser (qu'elles proviennent du réseau lui-même ou de son environnement géographique) rendent extrêmement complexes le travail de l'optimiseur.

D'une manière générale, un besoin existe donc pour faciliter le travail de l'optimiseur, et faire en sorte que les tâches d'analyse, et plus généralement d'optimisation, puissent être réalisées de façon plus simple, plus efficace et plus économique pour l'opérateur. La présente invention permet notamment de répondre à ce type de besoin.

Un des objets de la présente invention est un procédé pour l'exploitation d'un réseau cellulaire de communications mobiles, ledit procédé comportant :
- une étape de calcul d'au moins un paramètre, dit paramètre de fréquence de réglage, représentatif de la fréquence de réglage d'au moins un paramètre radio associé à au moins un objet réseau,
- une étape d'utilisation dudit au moins un paramètre de fréquence de réglage, dans au moins une opération d'optimisation du réseau radio.

Un autre objet de la présente invention est un système pour l'exploitation d'un réseau cellulaire de communications mobiles, ledit système comportant :
- des moyens de calcul d'au moins un paramètre, dit paramètre de fréquence de réglage, représentatif de la fréquence de réglage d'au moins un paramètre radio associé à au moins un objet réseau,
- des moyens d'utilisation dudit au moins un paramètre de fréquence de réglage, dans au moins une opération d'optimisation du réseau radio.

Un autre objet de la présente invention est une station de travail pour système pour l'exploitation d'un réseau cellulaire de communications mobiles, ladite station de travail comportant :
- des moyens pour permettre à l'utilisateur de sélectionner au moins un paramètre dit paramètre de fréquence de réglage, représentatif de la fréquence de réglage d'au moins un paramètre radio associé à au moins un objet réseau, pour son utilisation dans au moins une opération d'optimisation du réseau radio.

D'autres objets et caractéristiques de la présente invention apparaîtront à la lecture de la description suivante d'exemples de réalisation, faite en relation avec les dessins ci-annexés dans lesquels:
- la figure 1 rappelle l'architecture générale d'un système cellulaire de communications mobiles,
- la figure 2 rappelle l'architecture générale d'un système pour l'exploitation d'un réseau cellulaire de communications mobiles,
- la figure 3 est un schéma destiné à illustrer un exemple de procédé suivant l'invention
- La figure 4 est un schéma destiné à illustrer un exemple d'utilisation de cellule de référence (ou plus généralement d'objet de référence), pour la fonction de « tuning » (ou réglage de configuration radio).

Suivant un de ses différents aspects, la présente invention propose un nouveau type d'indicateur, appelé aussi indicateur de fréquence de réglage, différent des indicateurs existants (tels que les indicateurs de qualité de service existants rappelés ci-dessus), et apte à indiquer, pour un objet réseau donné, la fréquence de réglage d'au moins un paramètre radio associé à cet objet réseau.

La présente invention est applicable à tous types d'objets réseau pouvant être manipulés ou gérés dans le cadre d'opérations d'optimisation du réseau radio.

Par exemple, pour le cas d'objet réseau correspondant au cas de cellule, un tel indicateur permettra à l'optimiseur de déterminer immédiatement pour quelles cellules la configuration radio est fréquemment ajustée, c'est-à-dire quelles cellules posent des problèmes de configuration radio. Inversement, une cellule pour laquelle la configuration radio est rarement ajustée correspond à une cellule ne posant pas de problèmes de configuration radio, et qui pourrait donc par exemple être choisie comme cellule de référence dont la configuration radio pourrait être reproduite sur d'autres cellules.

Des exemples d'utilisation de cellule de référence (ou plus généralement objet de référence) pour la fonction de « tuning » (ou réglage de configuration radio) seront décrits plus loin.

Suivant un autre de ses différents aspects, la présente invention propose de définir :
- d'une part un indicateur qui pourrait aussi être appelé « indicateur global», apte à indiquer, pour l'objet réseau considéré, une fréquence de réglage « globale », c'est-à-dire pour les différents types possibles d'opérations de réglage et/ou évènements associés,
- d'autre part une famille d'indicateurs aptes à indiquer, pour l'objet réseau considéré, la fréquence de réglage selon le type d'opération de réglage et/ou événement associé.

Suivant un autre de ses différents aspects, la présente invention propose en outre de définir :
- un premier indicateur, apte à indiquer un résultat de comptage d'opérations de réglage sur une période de comptage donnée,
- un deuxième indicateur, apte à indiquer une fréquence de réglage proprement dite, ou résultat de comptage par unité de temps de comptage.

A titre d'exemple, dans ce qui suit, on considèrera tout d'abord le cas d'objets réseau correspondant à des cellules ou à des élements de réseau de type contrôleur de stations de base (tel que BSC, pour « Base Station Controller » pour le cas de système de type GSM par exemple, ou RNC, pour « Radio Network Controller » pour le cas de système de type UMTS par exemple), puis on considèrera ensuite le cas d'objet réseau correspondant au réseau lui-même.

Les paramètres radio d'un réseau peuvent notamment être classés en : paramètres de cellule (gérés au niveau de la cellule ; leur valeur peut être différente pour chaque cellule ou chaque groupe de cellule), paramètres gérés au niveau BSC ou RNC, et paramètres réseau (définis pour l'ensemble du réseau).

On considère tout d'abord le cas de paramètres radio gérés au niveau d'une cellule ou d'un BSC/RNC.

Suivant un de ses différents aspects, la présente invention propose de définir pour chaque cellule du réseau un indicateur qui donne la fréquence de réglage de cette cellule.

Suivant un autre de ses différents aspects, la présente invention propose également de définir pour chaque cellule du réseau :
- un « indicateur global » donnant sa fréquence de réglage « gloable » c'est-à-dire pour les différents types possibles d'opérations de réglage et/ou évènements associés,
- une famille d'indicateurs permettant d'affiner l'information fournie par cet indicateur global. Les indicateurs de cette famille donneront la fréquence de réglage de la cellule selon le type d'opération de réglage effectué, lié à un événement pouvoir avoir un impact sur le réseau.

Par exemple, un indicateur pourra donner la fréquence de réglage des adjacences (ou relations de voisinage entre cellules), un autre pourra donner la fréquence de réglage de la fréquence radio pour chaque cellule, un autre pourra donner la fréquence de réglage de paramètres logiques de la cellule, ...etc. D'autres exemples d'opérations de réglage et/ou évènements associés seront donnés plus loin.

Comme tous les paramètres gérés au niveau de la cellule ou au niveau BSC/RNC sont les mêmes pour toutes les cellules du réseau, il est possible, grâce à ces nouveaux indicateurs, de comparer facilement le nombre de changements de configuration effectués pour les différentes cellules. De tels indicateurs sont créés à la création d'une cellule (ou au moment où elle est déclarée comme nouvelle cellule). Il sont initialisés avec une valeur nulle car, à la création de la cellule, aucun réglage de configuration de la cellule n'a encore été effectué.

Suivant un autre de ses différents aspects, la présente invention propose en outre de définir :
- un premier indicateur (Ind1) qui donne le nombre de fois qu'un paramètre de cellule a été ajusté pour la cellule considérée, depuis sa création,
- un deuxième indicateur (Ind2) qui donne ce nombre par unité de temps de comptage, c'est-à-dire qui donne réellement la fréquence de réglage.

L'indicateur Ind1 est incrémenté pour la cellule à chaque fois qu'une opération de réglage est effectuée sur un des paramètres définis pour la cellule. On notera qu'une telle incrémentation est effectuée seulement lorsque l'opération de réglage a réellement été appliquée au réseau afin d'éviter de compter des opérations de réglage qui en fait ne seraient pas appliquées.

L'indicateur Ind2 est lié à la période de temps de comptage, afin de faciliter la comparaison entre les différents cellules du réseau. En effet, toutes les cellules du réseau ne sont pas nécessairement créées au même moment. Leur période de comptage peut donc être différente, ce qui pourrait fausser la comparaison.

Avec ces indicateurs définis pour chaque cellule du réseau, l'optimiseur peut immédiatement savoir quelles cellules sont fréquemment ajustées ou non. Il peut aussi consulter l'historique (c'est-à-dire l'évolution) de ces indicateurs et faire un lien avec la connaissance des évènements pouvant avoir un impact sur le réseau (évènements propres au réseau tels que par exemple un nouveau plan de fréquence, ou évènements extérieurs au réseau mais pouvant avoir un impact sur le trafic, tels que par exemple une manifestation importante prévue dans une zone géographique donnée).

Cette corrélation avec les évènements est facilitée par la définition d'une famille d'indicateurs affinant l'information fournie par un indicateur global. En d'autres termes, un indicateur global calcule une fréquence de réglage « globale », c'est-à-dire pour tous les types possibles d'opérations de réglage et/ou évènements associés, tandis que les autres indicateurs de la famille donnent la fréquence de réglage par type d'opération de réglage et/ou événement associé.

Une liste non exhaustive de type d'opérations de réglage et/ou évènements est donnée dans ce qui suit :
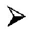 Evènements propres au réseau :
- Opération de réglage d'adjacence : cette opération consiste à créer ou supprimer des relations d'adjacence entre cellules afin de permettre des transferts intercellulaires ou « handovers » entre les cellules sélectionnées,
- Opération de réglage de paramètre d'adjacence : cette opération consiste à ajuster un ou plusieurs des paramètres associés à une relation d'adjacence entre deux cellules.
- Changement de capacité de cellule : cette opération consiste à augmenter ou diminuer la capacité de la cellule de manière à augmenter ou diminuer le traffic géré par la cellule.
- Changement de type de cellule : cette opération consiste à modifier la couverture de la cellule et/ou la manière dont la traffic est géré dans la cellule et dans ses voisines.
- Changement de fréquence: cette opération consiste à modifier la fréquence d'une ou plusieurs cellules.
- Changement de paramètre : cette opération consiste à changer la valeur d'un ou plusieurs paramètres ayant un impact sur les algorithmes utilisés dans les équipmements.
- Changement de paramètre planifié : cette opération consiste à utiliser de nouvelles valeurs planifiées pour un ou plusieurs paramètres.
- Changement de version de la norme : cette opération consiste généralement à ajouter de nouvelles fonctionnalités prévues par une nouvelle version de la norme.
- Changement de topologie : cette opération concerne tous les changements apportés à la topologie du réseau comme par exemple créer une nouvelle cellule, supprimer une cellule, transférer une cellule d'un BSC à un autre, ...etc.
   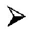 Evènements extérieurs au réseau :
- Jour de départ en congés, ...etc
- Noël, Jour de l'An, ...etc
- Exposition dans un centre d'expositions, ...etc.
- ...

On considère maintenant le cas de paramètres radio gérés au niveau du réseau lui-même (et non au niveau de la cellule).

Dans le cas de paramètres réseau appliqués à l'ensemble du réseau, il est aussi intéressant de prévoir un indicateur de fréquence de réglage, permettant de savoir si le réglage d'un paramètre réseau est difficile (ce qui est le cas si ce paramètre doit souvent être ajusté).

Ainsi, suivant un de ses différents aspects, la présente invention propose de prévoir un indicateur qui donne la fréquence de réglage pour chaque paramètre réseau. Un tel indicateur permet de déterminer quels paramètres sont fréquemment ajustés et donc plus difficiles à gérer que d'autres qui sont rarement ajustés. Un paramètre de réseau qui est rarement ajusté correspond probablement à une bonne valeur de référence pour ce réseau, qu'il pourrait par exemple être intéressant de propager à d'autres réseaux.

Suivant un autre de ses différents aspects, et comme pour les indicateurs sur les cellules, la présente invention propose égalament de définir une famille d'indicateurs permettant d'affiner l'information fournie par un indicateur « global ».

Suivant un autre de ses différents aspects, et de même que pour les indicateurs sur les cellules, la présente invention propose également de définir, pour chaque paramètre réseau :
- un premier indicateur (Ind_a) qui donne le nombre de fois qu'un paramètre réseau a été ajusté (c'est-à-dire modifié) depuis la création du réseau,
- un deuxième indicateur (Ind_b) qui donne ce nombre de fois par unité de temps de comptage, c'est-à-dire qui donne réellement la fréquence de réglage.

Comme pour les indicateurs sur les cellules, l'optimiseur peut consulter l'historique (c'est-à-dire l'évolution) de ces indicateurs et faire un lien avec la connaissance des évènements pouvant avoir un impact sur le réseau. Cette corrélation avec les évènements est facilitée par la définition d'une famille d'indicateurs affinant l'information fournie un « indicateur global ». En d'autres termes, un « indicateur global » fournit une fréquence de réglage « globale », c'est-à-dire pour tous les types possibles d'opérations de réglage et/ou évènements associés, tandis que les indicateurs de la famille donnent la fréquence de réglage par type d'opération de réglage et/ou événement associé.

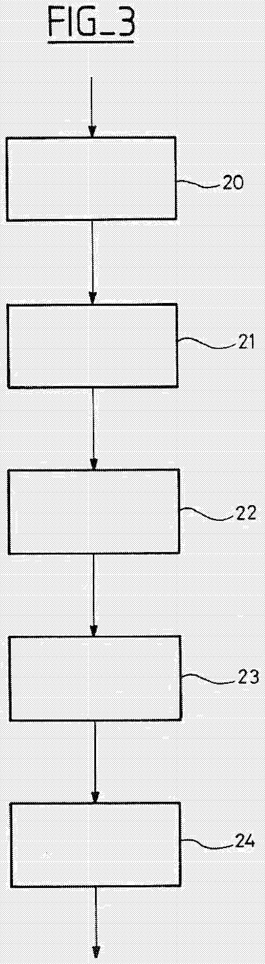

En d'autres termes, ou plus généralement, un procédé suivant l'invention, pour l'exploitation d'un réseau cellulaire de communications mobiles, comporte, comme illustré dans l'exemple de la figure 3 :
- une étape 23 de calcul d'au moins un paramètre dit paramètre de fréquence de réglage, représentatif de la fréquence de réglage d'au moins un paramètre radio associé à au moins un objet réseau,
- une étape 24 d'utilisation dudit au moins un paramètre de fréquence de réglage, dans au moins une opération d'optimisation du réseau radio.

En outre, dans l'exemple illustré sur la figure 3, le procédé comporte une étape 20 de sélection d'objet réseau et/ou de paramètre radio associé. Notamment :
- Suivant un exemple, ledit objet réseau correspond à une cellule ou à un contrôleur de stations de base, et ledit au moins un paramètre radio associé correspond à au moins un paramètre radio géré au niveau de la cellule ;
- Suivant un autre exemple, ledit objet réseau correspond au réseau lui-même, et ledit au moins un paramètre radio associé correspond à au moins un paramètre radio géré au niveau du réseau.

En outre, dans l'exemple illustré sur la figure 3, le procédé comporte une étape 21 de sélection de type d'indicateur, à savoir « global » ou par type d'opération de réglage et/ou événement associé. En d'autres termes :
- Suivant un mode de réalisation, ladite étape de calcul est effectuée pour tous les types possibles d'opérations de réglage et/ou évènements associés ;
- Suivant un autre mode de réalisation, ladite étape de calcul est effectuée par type d'opération de réglage et/ou évènement associé.

En outre, dans l'exemple illustré sur la figure 3, le procédé comporte une étape 22 de sélection de mode de calcul d'indicateur de fréquence de réglage :
- Suivant un premier mode de calcul, ladite étape de calcul comporte un comptage d'opérations de réglage sur une période donnée ;
- Suivant un deuxième mode de calcul, ladite étape de calcul comporte un comptage d'opérations de réglage par unité de temps de comptage.

La présente invention a également pour objet un système pour l'exploitation d'un réseau cellulaire de communications mobiles, ledit système comportant :
- des moyens de calcul d'au moins un paramètre dit paramètre de fréquence de réglage, représentatif de la fréquence de réglage d'au moins un paramètre radio associé à au moins un objet réseau,
- des moyens d'utilisation dudit au moins un paramètre de fréqeunce de réglage, dans au moins une opération d'optimisation du réseau radio.

La présente invention a également pour objet une station de travail pour système pour l'exploitation d'un réseau cellulaire de communications mobiles, ladite station de travail comportant :
- des moyens pour permettre à l'utilisateur de sélectionner ledit paramètre de fréquence de réglage, pour utilisation dans au moins une opération d'optimisation du réseau radio.

La réalisation particulière de tels moyens ne présentant pas de difficulté particulière pour l'homme du métier, de tels moyens ne nécessitent pas d'être décrits ici de manière plus détaillée que ce qui a été fait précédemment, par leur fonction.

Tous ces nouveaux indicateurs peuvent donc être disponibles pour sélection par l'utilisateur, dans toute opération d'optimisation du réseau radio (comme les indicateurs de qualité de service existants et les paramètres de cellule et de réseau). L'optimiseur peut consulter la valeur de ces nouveaux indicateurs pour chaque cellule du réseau, respectivement pour chaque paramètre du réseau. Il peut aussi définir des seuils à partir desquels seront générées des alarmes, par exemple une alarme sera générée pour alerter l'optimiseur si la valeur d'un de ces nouveaux indicateurs est au-dessus d'un seuil ainsi défini.

La présente invention permet ainsi à l'optimiseur de voir immédiatement quelles sont les cellules qui posent des problèmes de configuration ou au contraire quelles sont les cellules qui pourraient être utilisées comme référence pour leur configuration radio (puisque l'optimiseur n'a pas eu besoin de les ajuster souvent). Pour les paramètres réseau, la présente invention permet aussi à l'opérateur de voir immédiatement quels paramètres réseau sont difficiles à ajuster et quels paramètres peuvent au contraire être définis comme de « bonnes » valeurs qu'il pourrait être intéressant d'appliquer à d'autres réseaux. En outre, fournir une famille entière d'indicateurs selon le type d'opération de réglage/événement facilitent la compréhension des problèmes de réseau rencontrés. En effet, l'opérateur saura immédiatement quelles sortes de types de réglage ont été plus souvent nécessaires sur les cellules qui ont présenté des problèmes de qualité de service. Ainsi, l'optimiseur peut mieux savoir où concentrer ses efforts pour améliorer la configuration radio.

On décrit maintenant des exemples d'utilisation de cellule de référence (ou plus généralement d'objet de référence), pour la fonction de « tuning » (ou réglage de configuration radio).

D'une manière générale, déterminer les meilleurs paramètres radio pour une cellule est une tâche délicate, qui peut nécessiter beaucoup d'opérations successives. De plus, très souvent, l'optimiseur doit effectuer cette tâche pour toute une zone du réseau sur laquelle il travaille. Par exemple, l'optimiseur doit définir la meilleure configuration radio pour couvrir (avec une bonne qualité de service) une zone sur laquelle se déroule un évènement ou une manifestation sur une période de temps donnée. Généralement, l'optimiseur essaiera de régler la configuration radio d'une cellule de cette zone afin de déterminer quelles valeurs de paramètres radio sont les meilleures. Comme indiqué ci-dessus, cette tâche peut nécessiter beaucoup d'opérations de réglage successives.

Ensuite, lorsque l'optimiseur à terminé l'opération de réglage de configuration radio pour la cellule initialement sélectionnée, il a deux possibilités :
- soit il entreprend la même opération de réglage de configuration radio pour toutes les autres cellules de la zone considérée afin d'avoir les mêmes valeurs de paramètres radio pour toutes ces cellules,
- soit, si les cellules ont préalablement été regroupées en une même classe de cellules, il peut appliquer les mêmes valeurs de paramètres radio à toutes les cellules de la classe au moyen d'une seule opération de réglage.

La première solution a notamment pour inconvénient de nécessiter des opérations longues et fastidieuses.

La deuxième solution n'a pas ces inconvénients, mais elle suppose qu'une classe de cellules ait préalablement été définie, et donc que des critères d'appartenance à cette classe aient préalablement été définis, et que les cellules vérifiant ces critères d'appartenance aient préalablement été sélectionnées pour constituer une classe de cellules. En d'autres termes, ce concept de classe de cellules conduit à une solution relativement complexe à mettre en œuvre.

A titre d'exemple de classes de cellules généralement utilisées, on peut citer les classes de cellules suivantes : Urbaine (« Urban » en anglais), Dense Urbaine (« Dense Urban » en anglais), Rurale (« Rural » en anglais), Suburbaine (« Suburban » en anglais), Environnements Intérieurs (« Indoor » en anglais). Pour toutes les cellules appartenant à une même classe, les valeurs de tous les paramètres radio sont les mêmes, et l'utilisateur peut modifier des valeurs de ces paramètres par une même opération de « tuning » pour l'ensemble des cellules de la classe. Il est à noter que ce concept de classe de cellules inclut une notion de durée : toutes les cellules appartenant à une même classe sont liées entre elles dans le temps. Il n'est pas possible d'avoir un tel lien pour une période définie, notamment une courte période (telle que notamment la durée d'une événement ou d'une manifestation temporaire). En d'autres termes ce concept de classe de cellule conduit à une solution qui manque de flexibilité ; notamment, cette solution n'est pas bien adaptée au cas de groupe de cellules constitué pour les besoins d'un événement ou d'une manifestation temporaire.

Pour éviter tout ou partie de ces inconvénients, ou plus généralement pour améliorer l'optimisation des réseaux de communications mobiles, il est proposé un procédé pour l'exploitation d'un réseau cellulaire de communications mobiles, ledit procédé comportant :
- une étape de sélection d'objet dit objet de référence pour une opération de réglage de configuration radio réalisée pour un groupe d'objets, selon laquelle tout ou partie de la configuration radio dudit objet de référence est reproduit sur les objets dudit groupe,
- une étape de réalisation de ladite opération de réglage de configuration radio, selon laquelle tout ou partie de la configuration radio dudit objet de référence sélectionné est reproduit sur les objets dudit groupe.

De même, il est proposé un système pour l'exploitation d'un réseau cellulaire de communications mobiles, ledit système comportant :
- des moyens pour sélectionner un objet dit objet de référence pour une opération de réglage de configuration radio réalisée pour un groupe d'objets, selon laquelle tout ou partie de la configuration radio dudit objet de référence est reproduit sur les objets dudit groupe,
- des moyens pour réaliser ladite opération de réglage de configuration radio, selon laquelle tout ou partie de la configuration radio de l'objet de référence sélectionné est reproduit sur les objets dudit groupe.

De même, il est proposé une station de travail pour l'exploitation d'un réseau cellulaire de communications mobiles, ladite station de travail comportant :
- des moyens pour permettre à l'utilisateur de sélectionner un objet dit objet de référence pour une opération de réglage de configuration radio réalisée pour un groupe d'objets, selon laquelle tout ou partie de la configuration radio dudit objet de référence est reproduit sur les objets dudit groupe.

A titre d'exemple, la description suivante sera plus particulièrement faite pour le cas d'objets correspondants à des cellules, mais ces principes sont généralement applicables à tout type d'objets pouvant être manipulés ou gérés dans le cadre d'opérations d'optimisation du réseau radio.

Il est proposé de permettre à l'optimiseur de reproduire immédiatement, au niveau d'un groupe de cellules qu'il a sélectionné, le résultat d'une ou de plusieurs opérations de « tuning » entreprises pour définir une meilleure configuration radio pour une cellule choisie (dite cellule de référence). La configuration radio de la cellule de référence sera alors recopiée/propagée sur chaque cellule du groupe, en une seule opération.

Il est à noter qu'il est possible de reproduire soit seulement les valeurs d'un sous-ensemble de paramètres définissant la configuration radio, soit l'ensemble des paramètres définissant la configuration radio.

Il est également proposé de définir une nouvelle opération de « tuning » (ou réglage de configuration radio) qui pourrait être appelée « réglage de configuration radio basé sur une cellule de référence ». Cette opération permet de reproduire automatiquement les valeurs d'un ensemble de paramètres sélectionnés, sur toutes les cellules du groupe sélectionné. Cette nouvelle opération peut être définie pour tout type de système et/ou tout type de norme applicable, y compris le cas de plusieurs normes applicables.

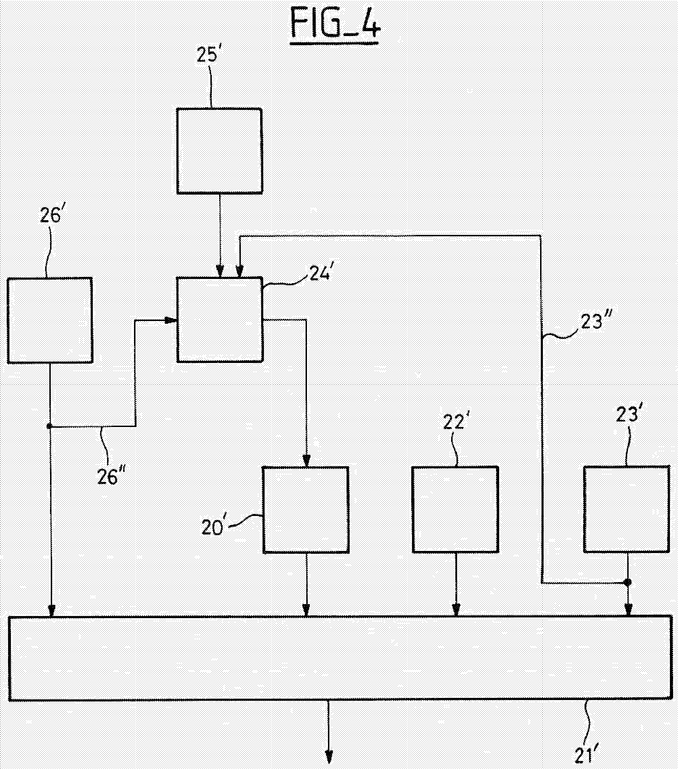

En d'autres termes, il est proposé un procédé pouvantt comporter, comme illustré sur la figure 4 :
- une étape 20' de sélection de cellule dite cellule de référence pour une opération de réglage de configuration radio réalisée pour un groupe de cellules, selon laquelle tout ou partie de la configuration radio de ladite cellule de référence est reproduit sur les cellules dudit groupe,
- une étape 21' de de réalisation de ladite opération de réglage de configuration radio, selon laquelle tout ou partie de la configuration radio de la cellule de référence sélectionnée est reproduit sur les cellules dudit groupe.

Un tel procédé peut également comporter, comme illustré sur la figure 4 :
- une étape 22' de sélection d'au moins un paramètre radio représentatif d'au moins une partie de ladite configuration radio à reproduire.

Un tel procédé peut également comporter, comme illustré sur la figure 4 :
- une étape 23' de sélection de cellules formant ledit groupe.

Un tel procédé peut également comporter, comme illustré sur la figure 4 :
- une étape 24' d'établissement de liste de cellules de référence, parmi lesquelles ladite cellule de référence sera sélectionnée à l'étape 20'.

Avantageusement, ladite liste est établie dynamiquement en fonction du groupe de cellules considéré, comme illustré en 23".

Un tel procédé peut également comporter, comme illustré sur la figure 4 :
- une étape 25' de définition de cellules de référence, pouvant être incluses dans ladite liste de cellules de référence établie à l'étape 24'.

Un tel procédé peut également comporter, comme illustré sur la figure 4 :
- une étape 26' de sélection, parmi différents types possibles d'opérations de réglage de configuration radio, d'un type d'opération de réglage de configuration radio, correspondant à ladite opération de réglage de configuration radio réalisée pour un groupe de cellules.

Notamment, l'étape 24' d'établissement de liste de cellules de référence peut être commandée par la sélection d'un type d'opération de réglage de configuration radio correspondant à ladite opération de réglage de configuration radio réalisée pour un groupe de cellules, comme illustré en 26".

Des exemples de réalisation ou de mise en ouevre d'un tel procédé sont donnés dans ce qui suit, ces exemples correspondant plus particulièrement au cas de station de travail utilisant une interface avec l'utilisateur de type « interface graphique », ou GUI (pour « Graphical User Interface ») permettant à l'utilisateur de manipuler des objets sur un écran.

Il est par exemple possible de prévoir un moyen de dialogue, tel que par exemple un bouton, permettant de sélectionner un type d'opération de réglage de configuration radio, correspondant à un « réglage de configuration radio basé sur une cellule de référence ». Par exemple, lorsque l'utilisateur clique sur ce bouton, une liste de cellules de référence s'affiche dans une nouvelle fenêtre. L'utilisateur sélectionne alors dans cette fenêtre la cellule de référence qui sera utilisée dans son opération de réglage de configuration radio basée sur une cellule de référence. Les valeurs de paramètres sélectionnés de la cellule de référence sélectionnée, seront alors immédiatement reproduites sur toutes les cellules du groupe de cellules qu'il aura sélectionné.

La liste de cellules de référence peut par exemple être construite en utilisant des critères de manière à aider l'utilisateur à choisir la meilleure cellule de référence possible pour le groupe de cellules pour lequel il souhaite effectuer une opération de « tuning ». A titre d'exemples de tels critères, on peut citer notamment la proximité géograhique, ou des caractéristiques de cellule comme le type (par exemple microcellule, macrocellule, ...etc.) ou la classe. En d'autres termes, la liste de cellules de référence peut être construite dynamiquement pour chaque groupe de cellules pour lequel l'utilisateur souhaite effectuer une opération de « tuning ». Par exemple, connaître quelle cellule de référence, parmi les cellules de référence qui lui sont proposées, est la plus proche de ce groupe de cellules peut être intéressant pour l'utilisateur (particulièrement dans le cas d'évènements particuliers localisés dans des zones spécifiques).

Les cellules de cette liste auront préalablement été définies comme des cellules de référence. Pour cela, il est par exemple possible de prévoir que, lorsque l'utilisateur clique sur le symbole choisi pour représenter une cellule sur l'écran, un menu contextuel s'affiche qui permet, parmi d'autres opérations possibles sur les cellules, de définir la cellule comme une cellule de référence .

Il est également possible par exemple d'ajouter un nouveau champ aux objets réseau correspondant à des cellules, ce champ indiquant si la cellule a été définie ou non comme une cellule de référence. Pour permettre de distinguer immédiatement les cellules de référence des autres cellules du réseau, il est par exemple possible d'associer à ce champ un moyen permettant d'indiquer si une cellule est une cellule de référence (par exemple au moyen d'un représentation en caractères gras, ou encore au moyen d'icone particulière, ...etc).

De même, il est proposé un système pour l'exploitation d'un réseau cellulaire de communications mobiles pouvantt ainsi comporter :
- des moyens pour sélectionner un objet dit objet de référence pour une opération de réglage de configuration radio réalisée pour un groupe d'objets, selon laquelle tout ou partie de la configuration radio dudit objet de référence est reproduit sur les objets dudit groupe,
- des moyens pour réaliser ladite opération de réglage de configuration radio, selon laquelle tout ou partie de la configuration radio dudit objet de référence sélectionné est reproduit sur les objets dudit groupe.

De même, il est proposé une station de travail pour un tel système pour l'exploitation d'un réseau cellulaire de communications mobiles, pouvant ainsi comporter, séparément ou en combinaison :
- des moyens pour permettre à l'utilisateur de sélectionner un objet dit objet de référence pour une opération de réglage de configuration radio réalisée pour un groupe d'objets, selon laquelle tout ou partie de la configuration radio dudit objet de référence est reproduit sur les objets dudit groupe,
- des moyens pour permettre à l'utilisateur de sélectionner au moins un paramètre radio représentatif d'au moins une partie de ladite configuration radio à reproduire,
- des moyens pour permettre à l'utilisateur de sélectionner les objets formant ledit groupe,
- des moyens pour permettre à l'utilisateur de sélectionner, parmi différents types possibles d'opérations de réglage de configuration radio, un type d'opération de réglage de configuration radio correspondant à ladite opération de réglage de configuration radio réalisée pour un groupe d'objets,
- des moyens pour proposer à l'utilisateur une liste d'objets de référence, parmi lesquelles ledit objet de référence sera sélectionné (ladite liste étant avantageusement établie dynamiquement en fonction du groupe d'objets considéré),
- des moyens pour permettre à l'utilisateur de définir des objets de référence pouvant être inclus dans ladite liste d'objets de référence,
- des moyens pour permettre à l'utilisateur de distinguer immédiatement les objets de référence des autres objets du réseau.

La réalisation particulière de tels moyens ne présentant pas de difficulté particulière pour l'homme du métier, de tels moyens ne nécessitent pas d'être décrits ici de manière plus détaillée que ce qui a été fait précédemment, par leur fonction.

## Revendications

1. Procédé pour l'exploitation d'un réseau cellulaire de communications mobiles (6), ledit procédé comportant :
- une étape (23) de calcul d'au moins un paramètre, dit paramètre de fréquence de réglage, représentatif de la fréquence de réglage d'au moins un paramètre radio associé à au moins un objet réseau,
- une étape (24) d'utilisation dudit au moins un paramètre de fréquence de réglage, dans au moins une opération d'optimisation du réseau radio.

2. Procédé selon la revendication 1, dans lequel ladite étape de calcul comporte un comptage d'opérations de réglage sur une période donnée.

3. Procédé selon la revendication 1, dans lequel ladite étape de calcul comporte un comptage d'opérations de réglage par unité de temps de comptage.

4. Procédé selon l'une des revendications 1 à 3, dans lequel ladite étape de calcul est effectuée pour tous les types d'opérations de réglage et/ou événements associés.

5. Procédé selon l'une des revendications 1 à 3, dans lequel ladite étape de calcul est effectuée par type d'opération de réglage et/ou évènement associé.

6. Procédé selon l'une des revendications 1 à 5, dans lequel ledit objet réseau correspond à une cellule ou à un contrôleur de stations de base, et ledit au moins un paramètre radio associé correspond à au moins un paramètre radio géré au niveau de la cellule.

7. Procédé selon l'une des revendications 1 à 5, dans lequel ledit objet réseau correspond au réseau lui-même, et ledit au moins un paramètre radio associé correspond à au moins un paramètre radio géré au niveau du réseau.

8. Système (5) pour l'exploitation d'un réseau cellulaire de communications mobiles (6), ledit système comportant :
- des moyens de calcul d'au moins un paramètre, dit paramètre de fréquence de réglage, représentatif de la fréquence de réglage d'au moins un paramètre radio associé à au moins un objet réseau,
- des moyens d'utilisation dudit au moins un paramètre de fréqeunce de réglage, dans au moins une opération d'optimisation du réseau radio.

9. Station de travail (11) pour système (5) pour l'exploitation d'un réseau cellulaire de communications mobiles (6), ladite station de travail comportant :
- des moyens pour permettre à l'utilisateur de sélectionner au moins un paramètre dit paramètre de fréquence de réglage, représentatif de la fréquence de réglage d'au moins un paramètre radio associé à au moins un objet réseau, pour utilisation dans au moins une opération d'optimisation du réseau radio.

## Patentansprüche

1. Verfahren zum Betreiben eines zellularen Mobilkommunikationsnetzes (6), wobei das Verfahren Folgendes umfasst:
- - einen Schritt (23) zum Berechnen von mindestens einem Parameter, dem sogenannten Einstellfrequenzparameter, welcher die Einstellfrequenz von mindestens einem Funkparameter repräsentiert, der zumindest einem Netzwerkobjekt zugeordnet ist,
- - einen Schritt (24) zum Verwenden von dem mindestens einen Einstellfrequenzparameter bei mindestens einem Optimierungsvorgang des Funknetzes.

2. Verfahren nach Anspruch 1,
wobei der Berechnungsschritt das Zählen von Einstellvorgängen über einen gegebenen Zeitraum umfasst.

3. Verfahren nach Anspruch 1,
wobei der Berechnungsschritt das Zählen von Einstellvorgängen pro Zählzeiteinheit umfasst.

4. Verfahren nach einem der Ansprüche 1 bis 3,
wobei der Berechnungsschritt für alle Arten von Einstellvorgängen und/oder zugeordneten Ereignissen durchgeführt wird.

5. Verfahren nach einem der Ansprüche 1 bis 3,
wobei der Berechnungsschritt für alle Arten von einem Einstellvorgang und/oder einem zugeordneten Ereignis durchgeführt wird.

6. Verfahren nach einem der Ansprüche 1 bis 5,
wobei das Netzwerkobjekt einer Zelle oder einer Basisstationsteuerung entspricht und wobei der mindestens eine zugeordnete Funkparameter mindestens einem Funkparameter entspricht, der auf Zellenebene verwaltet wird.

7. Verfahren nach einem der Ansprüche 1 bis 5,
wobei das Netzwerkobjekt dem Netzwerk selbst entspricht und wobei der mindestens eine zugeordnete Funkparameter mindestens einem Funkparameter entspricht, der auf Netzwerkebene verwaltet wird.

8. System (5) zum Betreiben eines zellularen Mobilkommunikationsnetzes (6), wobei das System Folgendes aufweist:
- - eine Einrichtung zum Berechnen von mindestens einem Parameter, dem sogenannten Einstellfrequenzparameter, welcher die Einstellfrequenz mindestens eines Funkparameters repräsentiert, der zumindest einem Netzwerkobjekt zugeordnet ist, und
- eine Einrichtung zum Verwenden von dem mindestens einen Einstellfrequenzparameter bei mindestens einem Optimierungsvorgang des Funknetzes.

9. Arbeitsstation (11) für ein System (5) zum Betreiben eines zellularen Mobilkommunikationsnetzes (6),
wobei die Arbeitsstation Folgendes aufweist:
- - eine Einrichtung, um es zu ermöglichen, dass der Nutzer mindestens einen Parameter, den sogenannten Einstellfrequenzparameter, auswählen kann, welcher die Einstellfrequenz von mindestens einem Funkparameter repräsentiert, der zumindest einem Netzwerkobjekt zugeordnet ist, zur Verwendung bei mindestens einem Optimierungsvorgang des Funknetzes.

## Claims

1. Method for operating a cellular mobile communications network (6), said method comprising:
a calculation step (23) of at least one parameter, designated a frequency setting, representing the frequency setting of at least one radio parameter associated with at least one network object;
a use step (24) of said at least one frequency setting, in at least one optimization operation of the radio network.

2. Method according to claim 1, wherein said calculation step comprises counting setting operations over a given period.

3. Method according to claim 1, wherein said calculation step comprises counting setting operations by unit of counting time.

4. Method according to any one of claims 1 to 3, wherein said calculation step is carried out for all types of setting operation and/or associated events.

5. Method according to any one of claims 1 to 3, wherein said calculation step is carried out by type of operation setting and/or associated event.

6. Method according to any one of claims 1 to 5, wherein said network object corresponds to a cell or a base station controller, and said at least one associated radio parameter corresponds to at least one radio parameter managed at cell level.

7. Method according to any one of claims 1 to 5, wherein said network object corresponds to the network itself, and said at least one associated radio parameter corresponds to at least one radio parameter managed at the network level.

8. System (5) for operating a cellular mobile communications network (6), said system comprising:
calculation means for calculating at least one parameter, designated a frequency setting, representing the frequency setting of at least one radio parameter associated with at least one network object;
use means for using said at least one frequency setting, in at least one optimization operation of the radio network.

9. Workstation (11) for a system (5) for operating a cellular mobile communications network (6), said workstation comprising means enabling a user to select at least one parameter, designated a frequency setting, representing the frequency setting of at least one radio parameter associated with at least one network object, for use in at least one optimization operation of the radio network.
